# EUROPEAN PATENT SPECIFICATION

(11) **EP 2 803 518 B1**
(45) Date of publication and mention of the grant of the patent: **23.08.2017**
(21) Application number: 14168411.8
(22) Date of filing: 15.05.2014
(51) Int. Cl.: B60J 10/16, B60J 10/265, B60J 10/88

(54) **Sealing member**
Dichtungselement
Élément d'étanchéité

(30) Priority: 15.05.2013 US 201313894932
(43) Date of publication of application: 19.11.2014
(73) Proprietor: Henniges Automotive Sealing Systems North America, Inc., Dover, DE 19901 (US)
(72) Inventor: Murree, Steve J., Macomb, MI Michigan 48044 (US); Lagerstrom, Michael J., Bingham Farms, MI Michigan 48025 (US)
(74) Representative: McDonough, Jonathan

(56) References cited:
- DE-B3-102006 060 390
- GB-A- 2 393 752
- US-A1- 2005 084 629
- US-A1- 2010 095 600

## Description

### BACKGROUND OF THE INVENTION

### Field of the Invention

The subject invention generally relates to a window seal assembly for a motor vehicle. More specifically, the invention relates to a sealing member of the window seal assembly.

### Description of the Prior Art

Various window seal assemblies for motor vehicles are known in the art. These assemblies typically include multiple sealing members such as a header profile, post profiles, an outer belt profile, and molds (corner and end molds). Window seal assemblies must provide a robust weatherseal and enhance vehicle acoustics. In order provide a robust weatherseal and enhance vehicle acoustics, suppliers have designed complex, multi-material header profiles and other window seal members. The materials used to form such window seal members are typically elastomeric materials which can fade and/or discolor and even leach out oil and other chemicals over time and exposure to various environmental conditions. As such, although functional, these prior art window seal members are not always aesthetically pleasing, e.g., do not provide a uniform appearance when viewed from an exterior of the vehicle and/or do not maintain a uniform appearance over time.

Accordingly, manufacturers of window seal assemblies and the sealing members thereof go through great lengths to assure that their window seal assemblies and the window seal members thereof provide a uniform appearance when viewed from an exterior of the vehicle. For example, manufacturers have designed window seal members which are manufactured, typically by an extrusion and/or molding process and, once formed, each particular window seal member, such as a header profile, is spray coated with a composition that provides a uniform appearance when viewed from an exterior of the vehicle. Such spray processes require significant capital investment, additional process and drying time, and can only be applied in minimal thicknesses unless coated multiple times.

DE10 2006 060 390 B3 discloses a door sealing profile with a sealing section with a sealing lip extending in a longitudinal direction. A fastening section is fastened to a flange. The sealing section is manufactured from an elastically deformable material and curved in the longitudinal direction. The sealing lip has a free end and a base turned away from the free end. An auxiliary section is provided and arranged in an area of the curvature at the base of the sealing lip.

Accordingly, there exists a need for window seal assemblies and window seal members thereof that are economical to produce, provide a robust weatherseal, enhance vehicle acoustics, are aesthetically pleasing and do not fade or discolor over time and upon exposure to various environmental conditions.

### SUMMARY OF THE INVENTION AND ADVANTAGES

The subject invention provides a sealing member for a vehicle opening comprising:
a first co-extrusion layer defining a mounting channel, a window channel, and a front face spaced from said mounting channel and said window channel, said first co-extrusion layer formed from a first elastomeric composition;
a second co-extrusion layer having a portion disposed on said front face of said first co-extrusion layer and a sealing lip disposed on said first co-extrusion layer abutting said portion and extending away from said first co-extrusion layer towards a distal end, said second co-extrusion layer formed from a second elastomeric composition which is different than said first elastomeric composition; and
a third co-extrusion layer disposed on said portion and said sealing lip of said second co-extrusion layer for covering segments of said second co-extrusion layer that are visible from an exterior of the vehicle, said third co-extrusion layer formed from a thermoplastic vulcanizate composition which is different than said first and second elastomeric compositions.

Accordingly, the sealing member includes a third co-extrusion layer which provides a uniform appearance when viewed from an exterior of the vehicle. In addition, the sealing member can be color matched with corner and end molds and other parts of a window seal assembly. The third co-extrusian layer, which is formed from a thermoplastic vulcanizate composition which has excellent weatherability characteristics, i.e., is resistant to fading or discoloration after exposure to various environmental conditions. Further, the sealing member can be extruded in a cost-effective, in-line extrusion process which can eliminate the need to spray coat the sealing member to provide a uniform appearance when viewed from an exterior of the vehicle.

Preferably said sealing lip is further defined as a first sealing lip and wherein said second co-extrusion layer includes a second sealing lip extending away from said first co-extrusion layer towards a distal end wherein said first sealing lip and said second sealing lip are spaced from one another for creating a seal against the vehicle.

Preferably said portion has an exterior lip extending into said window channel of said first co-extrusion layer.

Preferably said front face defines the length of said portion.

Preferably said thermoplastic vulcanizate composition comprises a thermoplastic material selected from the group of polypropylene, polyethylene, ethylene vinyl acetate, and combinations thereof.

Preferably said thermoplastic vulcanizate composition comprises greater than 5 parts by weight of said thermoplastic material, based on 100 parts by weight of said thermoplastic vulcanizate composition.

Preferably said thermoplastic vulcanizate composition also comprises ethylene propylene diene monomer.

Preferably said second co-extrusion layer further includes a second portion disposed within said window channel of said first co-extrusion layer and wherein said second portion has a plurality of interior lips for sealing and guiding a window.

In a further aspect of the invention there is provided a method of forming a glass run sealing member comprising a first co-extrusion layer, a second co-extrusion layer, and a third co-extrusion layer, said method comprising the steps of:
co-extruding a first elastomeric composition to form the first co-extrusion layer, the first co-extrusion layer defining a mounting channel, a window channel, and a front face spaced from the mounting channel and the window channel;
co-extruding a second elastomeric composition, which is different than the first elastomeric composition, to form the second co-extrusion layer on the first co-extrusion layer, the second co-extrusion layer having a portion disposed on the front face of the first co-extrusion layer and a sealing lip disposed on the first co-extrusion layer abutting the portion and extending away from the first co-extrusion layer towards a distal end; and
co-extruding a thermoplastic vulcanizate composition, which is different than the first and second elastomeric compositions, to form the third co-extrusion layer on the second co-extrusion layer, the third co-extrusion layer disposed on the portion and the sealing lip of the second co-extrusion layer for covering segments of the second co-extrusion layer that are visible from an exterior of the vehicle.

Preferably the steps of co-extruding the first elastomeric composition to form the first co-extrusion layer and co-extruding the second elastomeric composition to form the second co-extrusion layer are conducted simultaneously.

Preferably the step of co-extruding the thermoplastic vulcanizate composition to form the third co-extrusion layer is conducted subsequent to the co-extrusion of the first and second co-extrusion layers.

Preferably the method further comprises the step of heating the first and second co-extrusion layers to cure the first and second elastomeric compositions prior to co-extruding the thermoplastic vulcanizate composition to form the third co-extrusion layer.

### BRIEF DESCRIPTION OF THE DRAWINGS

Other advantages of the present invention will be readily appreciated, as the same becomes better understood by reference to the following detailed description when considered in connection with the accompanying drawings.
Figure 1 is an exterior view of a window seal assembly including a sealing member for a vehicle door.
Figure 2 is a cross-sectional view of a first embodiment of the sealing member.
Figure 3 is a cross-sectional view of a second embodiment of a sealing member which is not according to the invention.
Figure 4A is a cross-sectional view of a third embodiment of the sealing member including a trim member shown spaced from the sealing member.
Figure 4B is a cross-sectional view of the sealing member of Figure 4A showing the trim member coupled to the sealing member.

### DETAILED DESCRIPTION OF THE INVENTION

Referring to the Figures, wherein like numerals indicate corresponding parts throughout the several views, a window seal assembly is shown generally at 10.

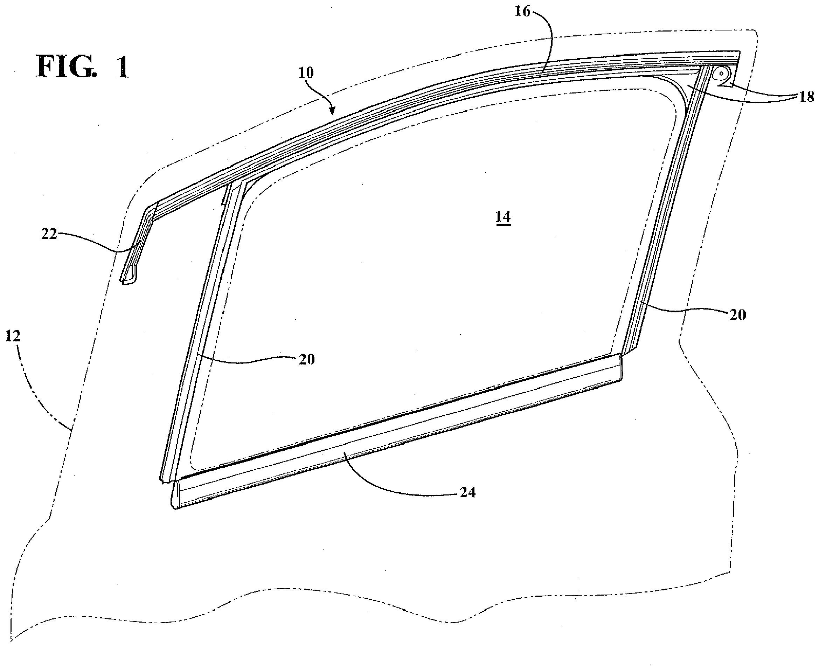

Figure 1 is an exterior view of vehicle door 12 which includes a window 14 which is movable in a vertical direction and a window seal assembly 10. The window 14 is slidably received in vertical guide tracks in the vehicle door 12. When the window 14 is closed, its edges are adapted to be received within and engaged by the window seal assembly 10. The window seal assembly 10 functions to secure the window 14 to the vehicle door 12 when the vehicle is traveling, to provide a seal between the window 14 and vehicle door 12, to enhance vehicle acoustics, and to provide an aesthetically pleasing appearance when viewed from an exterior of the vehicle.

The window seal assembly 10 shown in Figure 1 comprises a number of sealing members. Specifically, the window seal assembly 10 typically includes one or more sealing members such as a sealing member 16 (in this example a header profile), molds 18, pillar profiles 20, margin profiles 22, and a belt-line profile 24. The sealing member 16, molds 18, pillar profiles 20, margin profiles 22, and belt-line profile 24 typically have an outermost layer which is formed from a thermoplastic vulcanizate (TPV) composition and visible from an exterior of the vehicle.

It is to be appreciated that the window seal assembly 10 and sealing members thereof may be utilized for sealing trunk openings, door openings, and sunroof openings of the vehicle. It should also be appreciated that the window seal assembly 10 and sealing members thereof may be used for other purposes that are not specifically related to vehicles and are not described herein.

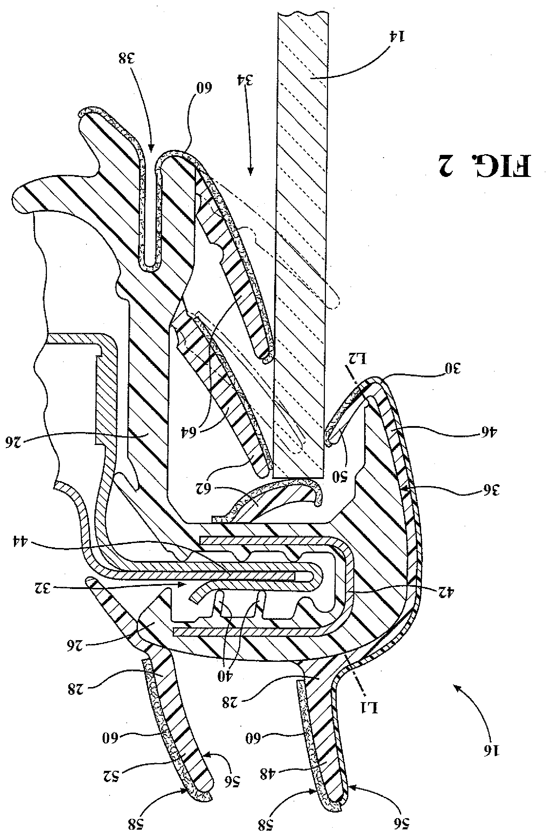

Referring to Figure 2, a cross-sectional view of a first embodiment of the sealing member 16 of the window seal assembly 10 is shown. The sealing member 16 includes a first co-extrusion layer 26 formed from a first elastomeric composition, a second co-extrusion layer 28 formed from a second elastomeric composition, and a third co-extrusion layer 30 formed from the TPV composition.

The first co-extrusion layer 26 defines a mounting channel 32, a window channel 34, and a front face 36 spaced from the mounting channel 32 and the window channel 34. In a typical embodiment, the front face 36 is substantially parallel to window channel 34 and extends from a first reference line L1 to second reference line L2. The window channel 34 is adjacent to the mounting channel 32. Further, the first co-extrusion layer 26 defines a bottom channel 38 adjacent and substantially parallel to the window channel 34.

The mounting channel 32 contains a plurality of gripping fins 40 for holding and securing the sealing member 16 to the vehicle door 12. The plurality of gripping fins 40 can be any desired quantity of gripping fins 40 or in any configuration for holding and securing the vehicle door.

The first co-extrusion layer 26 further includes a reinforcing member 42 disposed adjacent to the gripping fins 40 for reinforcing the mounting channel 32. The reinforcing member 42 is typically formed from a metal. Preferably, the reinforcing member 42 is formed from steel, e.g. a carbon steel, an alloy steel, a stainless steel, a tool steel, or a coated steel. For example, the reinforcing member 42 can be formed from an electro-galvanized steel or a mild steel. Alternatively, the reinforcing member 42 can be formed from an aluminum alloy. It should be appreciated that the reinforcing member 42 can formed from materials not described herein which are capable of providing the rigidity to grasp the mounting flange 44 of the door 12 to mount the sealing member 16 on the door 12.

The first co-extrusion layer 26 is formed from the first elastomeric composition. The first elastomeric composition includes an elastomer and can also include plasticizer, filler, and various other components and additives. In a preferred embodiment, the first elastomeric composition comprises ethylene propylene diene monomer ("EPDM"). However, it is to be appreciated that the first elastomeric composition can comprise elastomers other than EPDM such as styrene butadiene rubber ("SBR"), natural rubber, neoprene, and combinations thereof. It should also be appreciated that the first elastomeric composition can comprise thermoplastic or thermosetting materials not specifically described herein. The first elastomeric composition typically has a Shore A Hardness of from 65 to 100 and more typically from 80 to 90, when tested in accordance with ASTM D2240. Further, the first elastomeric composition typically has a specific gravity of from 1.2 to 1.6 and more typically from 1.3 to 1.5, g/cm³.

The second co-extrusion layer 28 has a portion 46 disposed on the front face 36 of the first co-extrusion layer 26 (extending from L1 to L2) and a sealing lip 48 disposed on the first co-extrusion layer 26 abutting the portion 46 and extending away from the first co-extrusion layer 26 towards a distal end. The front face 36 typically defines the length of the portion 46. The portion 46 may also include an exterior lip 50 extending into the window channel 34 of the first co-extrusion layer 26.

The second co-extrusion layer 28 may further include a second sealing lip 52 extending away from the first co-extrusion layer 26 towards a distal end. The second sealing lip 52 may have a tail which extends away from the distal end. When the second co-extrusion layer 28 includes a second sealing lip 52, the sealing lip 48 is further defined as the first sealing lip 48 and the first and the second sealing lips 48, 52 are spaced from one another for creating a seal against the door 12. In one embodiment, the first sealing lip 48 and the second sealing lip 52 are substantially parallel to one another for creating a seal against the door 12.

The first sealing lip 48 and second sealing lip 52 both contain an interior facing surface 56 and an exterior facing surface 58. A flocking material 60 covers the interior facing surface 56 of the first and second sealing lips 48, 52 for reducing the friction between the first and second sealing lips 48, 52 and the door 12. The flocking material 60 is also disposed on the first co-extrusion layer 26 adjacent to and within the bottom channel 38. The flocking material 60 is typically used on multiple surfaces of the sealing member 16 and typically comprises polyethylene. However, it is to be appreciated any low friction material could also be used on the interior facing surfaces 56 and first co-extrusion layer 26.

The second co-extrusion layer 28 further includes a second portion 62 disposed within the window channel 34 of the first co-extrusion layer 26. The second portion 62 includes a plurality of interior lips 64 for sealing and guiding the window. In one embodiment, the interior lips 64 include an apex to define a generally V-shaped cross sectional shape along a longitudinal axis for sealing and guiding the window 12. The interior lips 64 are disposed opposite the exterior lip 50 of the first portion 46 for sealing against an interior surface and exterior surface of the window 12, respectively. The plurality of interior lips 64 can be any desired quantity of interior lips 64 or in any configuration for sealing and guiding the window. Furthermore each of the interior lips 64 and the exterior lip 50 are typically coated with the flocking material 60 or another low friction material.

The second co-extrusion layer 28 is formed from the second elastomeric composition. The second elastomeric composition includes an elastomer and can also include plasticizer, filler, and various other components and additives. In a preferred embodiment, the second elastomeric composition comprises EPDM. However, it is to be appreciated that the second elastomeric composition can comprise elastomers other than EPDM such as SBR, natural rubber, neoprene, and combinations thereof. It is should also be appreciated that the second elastomeric composition can comprise thermoplastic or thermosetting materials not specifically described herein.

The second elastomeric composition and is typically softer and more flexible than the first elastomeric composition. Specifically, the second elastomeric composition exhibits excellent compression set. The second elastomeric composition typically has a Shore A Hardness of from 40 to 80 and more typically from 50 to 60, when tested in accordance with ASTM D2240. Further, the second elastomeric composition typically has a specific gravity of from 1.1 to 1.5 and more typically from 1.3 to 1.4, g/cm³.

The third co-extrusion layer 30 is disposed on the portion 46 and the sealing lip 48 of the second co-extrusion layer 28 for covering segments of the second co-extrusion layer 28 that are visible from an exterior of the vehicle. Specifically, the third co-extrusion layer 30 extends from the distal end of the front face 36 (L2) to the distal end of the first sealing lip 48. As such, the third co-extrusion layer 30 covers all portions of the sealing member 16 which are visible to an observer to achieve a uniform color appearance. The subject invention therefore eliminates the common production step of spray applying a coating to these visible surfaces.

The third co-extrusion layer 30 typically has a thickness greater than 0.1, alternatively from 0.1 to 4, alternatively from 0.5 to 2, mm. As such, the third co-extrusion layer 30 is also durable.

In the first embodiment, the placement of the third co-extrusion layer 30 on the sealing member 16, results in the sealing member 16 having two sealing lips, where the first sealing lip 48 is formed from the second elastomeric composition and the TPV composition, i.e., the second co-extrusion layer 28 and the third co-extrusion layer 30, and the second sealing lip 52 is formed from the second elastomeric composition, i.e., the second co-extrusion layer 28.

The thermoplastic TPV composition comprises an elastomer and also a thermoplastic. Suitable non-limiting examples of elastomers which may be included in the TPV composition are EPDM, styrene butadiene rubber, natural rubber, neoprene, and combinations thereof. In a preferred embodiment the TPV composition comprises EPDM. Suitable thermoplastics include acrylonitrile butadiene styrenes, acrylics, celluloids, cellulose acetates, cycloolefin copolymers, ethylene-vinyl acetates, ethylene vinyl alcohols, fluoropolymers, ionomers, liquid crystal polymers, polyacetals, polyacrylates, polyacrylonitriles, polyamides, polyamide-imides, polyaryletherketones, polybutadienes, polybutylenes, polybutylene terephthalates, polycaprolactones, polychlorotrifluoroethylenes, polyethylene terephthalates, polycyclohexylene dimethylene terephthalates, polycarbonates, polyhydroxyalkanoates, polyketones, polyesters, polyethylenes, polyetheretherketones, polyetherimides, polysulfones, polyethylenechlorinates, polyimides, polylactic acids, polymethylpentenes, polyphenylene oxides, polyphenylene sulfides, polyphthalamides, polypropylenes, polystyrenes, polysulfones, polytrimethylene terephthalates, polyurethanes, polyvinyl acetates, polyvinyl chlorides, polyvinylidene chlorides, styrene-acrylonitriles, and combinations thereof. The TPV composition typically comprises greater than 5, alternatively greater than 10, alternatively greater than 15, parts by weight thermoplastic material, based on 100 parts by of the TPV composition. In a preferred embodiment, the TPV composition comprises a thermoplastic material selected from the group of polypropylene, polyethylene, ethylene vinyl acetate ("EVA"), and combinations thereof. Of course, the TPV composition can include plasticizer, filler, and various other components and additives.

In a preferred embodiment, the TPV composition comprises EPDM and polypropylene. However, it is to be appreciated that the TPV composition can comprise elastomers other than EPDM such as SBR, natural rubber, neoprene, and combinations thereof, and thermoplastics other than polypropylene such as polyethylene and EVA. It should also be appreciated that the TPV composition can comprise elastomeric and thermoplastic materials not specifically described herein.

The TPV composition typically has a Shore A Hardness of from 65 to 100 and more typically from 70 to 80, when tested in accordance with ASTM D2240. Further, the TPV composition typically has a specific gravity of from 0.9 to 1.5 and more typically from 0.95 to 1.2, g/cm³. As alluded to above the, the TPV composition is UV stable and exhibits minimal discoloration after cycling in a xenon arc weatherometer.

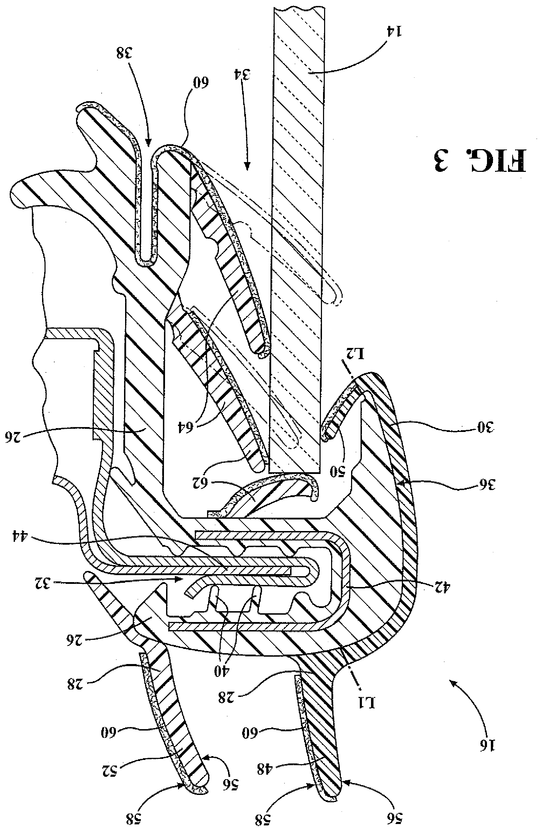

Referring to Figure 3, a cross-sectional view of a second embodiment of the sealing member 16 of the window seal assembly 10 and which is not according to the invention is shown. The sealing member 16 of this embodiment also includes the first co-extrusion layer 26 formed from the first elastomeric composition, the second co-extrusion layer 28 formed from the second elastomeric composition, and the third co-extrusion layer 30 formed from the TPV composition. The third co-extrusion layer has a face portion disposed on said front face of said first co-extrusion layer (extending from L1 to L2) for covering segments of first co-extrusion layer that are visible from an exterior of the vehicle. In this embodiment, the first sealing lip 48 is formed from the TPV composition, i.e., the third co-extrusion layer 30 and disposed on the first co-extrusion layer 26 abutting the face portion and extending away from the first co-extrusion layer 26 towards a distal end.

In contrast to the first embodiment, in this second embodiment the placement of the third co-extrusion layer 30 on the sealing member 16, results in the sealing member 16 having two sealing lips, where the first sealing lip 48 is formed entirely from the TPV composition, i.e., the third co-extrusion layer 30, and the second sealing lip 52 is formed exclusively from the second elastomeric composition, i.e., the second co-extrusion layer 28.

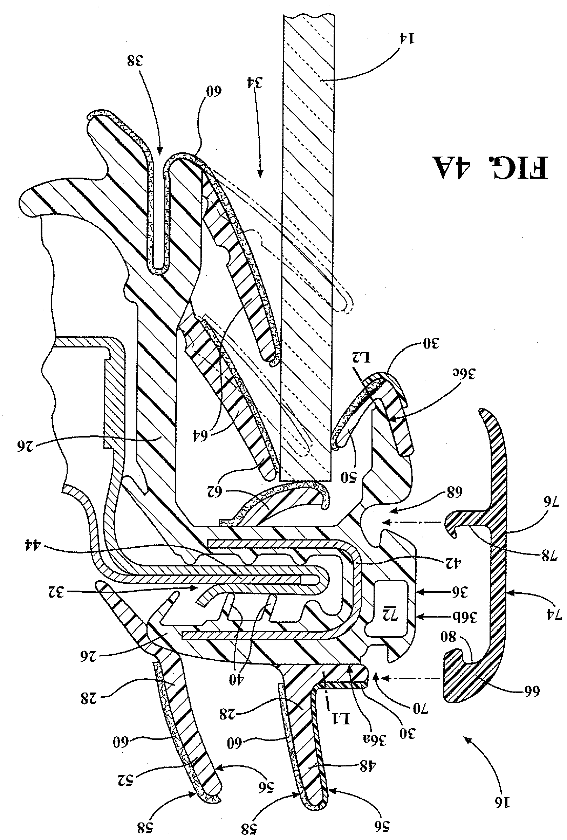

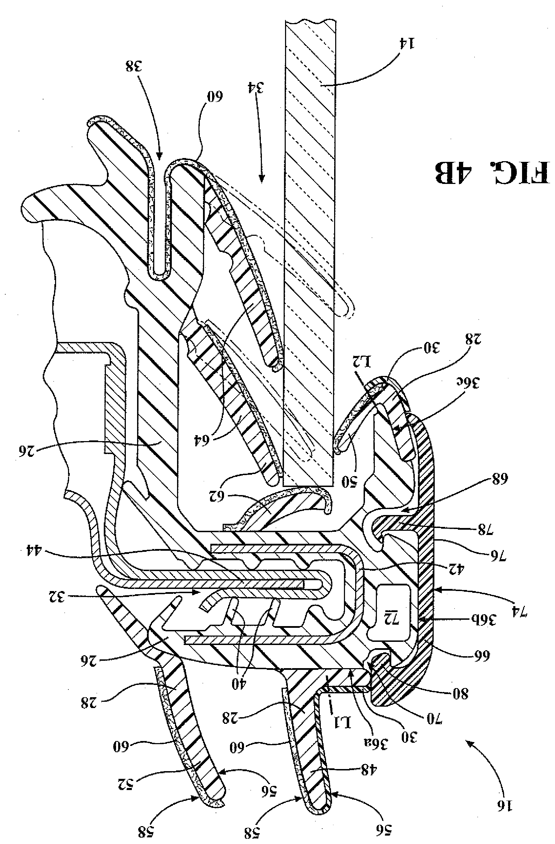

Referring to Figures 4A and 4B, a cross-sectional view of a third embodiment of the sealing member 16 of the window seal assembly 10 is shown. The third embodiment of the sealing member 16 can minimize the need for molds and result in an improved aesthetic appearance as well as enhanced window sealing. The trim member 66 can having various finishes such as low gloss black, high gloss black, and chrome.

The sealing member 16 of the third embodiment includes the first co-extrusion layer 26 formed from the first elastomeric composition, the second co-extrusion layer 28 formed from the second elastomeric composition, and the third co-extrusion layer 30 formed from the TPVcomposition. Of course, the first co-extrusion layer 26 of this embodiment defines the mounting channel 32, the window channel 34, the front face 36 spaced from the mounting channel 32, and the window channel 34. The first co-extrusion layer 26 of this third embodiment defines at least one channel for receiving the trim member 66. In one specific embodiment, the at least one channel is further defined as a pair of spaced channels, 68, 70 dividing said front face 36 into an upper portion 36a, a central portion 36b, and a lower portion 36c, with said second co-extrusion layer 28 only formed on a portion of said upper and lower portions 36a, 36c. As such, the third co-extrusion layer 30 covers segments of the first co-extrusion layer 26 that are visible from an exterior of the vehicle. Said differently, the first channel 68 dissects the front face 36 and the second channel 70 is adjacent to the first sealing lip 48.

In this embodiment, the first co-extrusion layer 26 also optionally defines a cavity 72 adjacent to the front face 36.

In this embodiment, the trim member 66 which has a front face 74, a main body 76, and a first and a second stem 78, 80, received within the channels 68, 70 of the sealing member 16. More specifically, the first and second stem 78, 80 are received within the channels 68, 70 to secure the trim member 66 to the sealing member 16. Figure 4A is a cross-sectional view of a third embodiment of the sealing member 16 with the trim member 66 shown spaced from the sealing member 16 whereas Figure 4B is a cross-sectional view of the sealing member 16 of Figure 4A showing the trim member 66 coupled to the sealing member 16.

A method of forming the sealing member 16 of the subject invention is also disclosed. The method includes the steps of co-extruding the first elastomeric composition to form the first co-extrusion layer 26, co-extruding the second elastomeric composition to form the second co-extrusion layer 28, and co-extruding the TPV composition to form the third co-extrusion layer 30.

In one embodiment of the method, the steps of co-extruding the first elastomeric composition to form the first co-extrusion layer 26 and co-extruding the second elastomeric composition to form the second co-extrusion layer 28 are conducted simultaneously. This embodiment also typically includes the step of heating the first and second co-extrusion layers 26, 28 to cure the first and second elastomeric compositions prior to co-extruding the TPV composition to form the third co-extrusion layer 30. Once cured, the first and second co-extrusion layers 26, 28 are optionally cooled. Further, the extrudite comprising the first and second co-extrusion layers 26, 28 is optionally fed through a flocking booth where flocking is applied. The step of co-extruding the TPV composition to form the third co-extrusion layer 30 is conducted subsequent to the co-extrusion of the first and second co-extrusion layers.

The invention has been described in an illustrative manner, and it is to be understood that the terminology which has been used is intended to be in the nature of words of description rather than of limitation. As is now apparent to those skilled in the art, many modifications and variations of the present invention are possible in light of the above teachings. It is, therefore, to be understood that within the scope of the appended claims, wherein reference numerals are merely for convenience and are not to be in any way limiting, the invention may be practiced otherwise than as specifically described

## Claims

1. A sealing member (16) for a vehicle opening comprising:
a first co-extrusion layer (26) defining a mounting channel (32), a window channel (34), and a front face (36) spaced from said mounting channel (32) and said window channel (34), said first co-extrusion layer (26) formed from a first elastomeric composition;
a second co-extrusion layer (28) having a portion (46) disposed on said front face (36) of said first co-extrusion layer (26) and a sealing lip (48) disposed on said first co-extrusion layer (26) abutting said portion (46) and extending away from said first co-extrusion layer (46) towards a distal end, said second co-extrusion layer (28) formed from a second elastomeric composition which is different than said first elastomeric composition; and
a third co-extrusion layer (30) disposed on said portion (46) and said sealing lip (48) of said second co-extrusion layer (28) for covering segments of said second co-extrusion layer (28) that are visible,from an exterior of the vehicle, said third co-extrusion layer (30) formed from a thermoplastic vulcanizate composition which is different than said first and second elastomeric compositions.

2. A sealing member (16) as claimed in claim 1 whereby said sealing lip (48) is further defined as a first sealing lip (48) and wherein said second co-extrusion layer (28) includes a second sealing lip (52) extending away from said first co-extrusion layer (26) towards a distal end wherein said first sealing lip (48) and said second sealing lip (52) are spaced from one another for creating a seal against the vehicle.

3. A sealing member (16) as claimed in claim 1 wherein said portion (46) has an exterior lip (50) extending into said window channel (34) of said first co-extrusion layer (26).

4. A sealing member (16) as claimed in claim 1 wherein said front face (36) defines the length of said portion (46).

5. A sealing member (16) as claimed in claim 1 wherein said thermoplastic vulcanizate composition comprises a thermoplastic material selected from the group of polypropylene, polyethylene, ethylene vinyl acetate, and combinations thereof.

6. A sealing member (16) as claimed in claim 5 wherein said thermoplastic vulcanizate composition comprises greater than 5 parts by weight of said thermoplastic material, based on 100 parts by weight of said thermoplastic vulcanizate composition.

7. A sealing member (16) as claimed in claim 6 wherein said thermoplastic vulcanizate composition also comprises ethylene propylene diene monomer.

8. A sealing member (16) as claimed in claim 1 wherein said second co-extrusion layer (28) further includes a second portion (62) disposed within said window channel (34) of said first co-extrusion layer (26) and wherein said second portion (62) has a plurality of interior lips (64) for sealing and guiding a window.

9. A method of forming a glass run sealing member (16) comprising a first co-extrusion layer (26), a second co-extrusion layer (28), and a third co-extrusion layer (30), said method comprising the steps of:
co-extruding a first elastomeric composition to form the first co-extrusion layer (26), the first co-extrusion layer (26) defining a mounting channel (32), a window channel (34), and a front face (36) spaced from the mounting channel (32) and the window channel (34);
co-extruding a second elastomeric composition, which is different than the first elastomeric composition, to form the second co-extrusion layer (28) on the first co-extrusion layer (26), the second co-extrusion layer (28) having a portion (46) disposed on the front face (36) of the first co-extrusion layer (26) and a sealing lip (48) disposed on the first co-extrusion layer (26) abutting the portion (46) and extending away from the first co-extrusion layer (26) towards a distal end; and
co-extruding a thermoplastic vulcanizate composition, which is different than the first and second elastomeric compositions, to form the third co-extrusion layer (30) on the second co-extrusion layer (28), the third co-extrusion layer (30) disposed on the portion (46) and the sealing lip (48) of the second co-extrusion layer (28) for covering segments of the second co-extrusion layer (28) that are visible from an exterior of the vehicle.

10. A method as claimed in claim 9 wherein the steps of co-extruding the first elastomeric composition to form the first co-extrusion layer (26) and co-extruding the second elastomeric composition to form the second co-extrusion layer (28) are conducted simultaneously.

11. A method as claimed in claim 9 wherein the step of co-extruding the thermoplastic vulcanizate composition to form the third co-extrusion layer (30) is conducted subsequent to the co-extrusion of the first and second co-extrusion layers (26, 28).

12. A method as claimed in claim 9 further comprising the step of heating the first and second co-extrusion layers (26, 28) to cure the first and second elastomeric compositions prior to co-extruding the thermoplastic vulcanizate composition to form the third co-extrusion layer (30).

## Patentansprüche

1. Dichtungselement (16) für eine Fahrzeugöffnung, umfassend:
eine erste Koextrusionsschicht (26), welche einen Montagekanal (32), einen Fensterkanal (34) und eine vom Montagekanal (32) und dem Fensterkanal (34) beabstandete Vorderfläche (36) festlegt, wobei diese erste Koextrusionsschicht (26) aus einer ersten elastomeren Komposition gebildet ist;
eine zweite Koextrusionsschicht (28), welche einen auf der Vorderseite (36) der ersten Koextrusionsschicht (26) angeordneten Abschnitt (46) und eine auf der ersten Koextrusionsschicht (26) angeordnete Dichtungslippe (48), die an dem Abschnitt (46) anliegt und sich von der ersten Koextrusionsschicht (26) weg zu einem distalen Ende erstreckt, aufweist, wobei diese zweite Koextrusionsschicht (28) aus einer zweiten elastomeren Komposition, die sich von der ersten elastomeren Komposition unterscheidet, gebildet ist; und
eine dritte Koextrusionsschicht (30), die auf dem Abschnitt (46) und der Dichtlippe (48) der zweiten Koextrusionsschicht (28) angeordnet ist, um Segmente der zweiten Koextrusionsschicht (28), die von ausserhalb des Fahrzeugs sichtbar sind, zu bedecken, wobei die dritte Koextrusionsschicht (30) aus einer thermoplastischen Vulkanisats-Komposition gebildet ist, die sich von der ersten und der zweiten elastomeren Komposition unterscheidet.

2. Dichtungselement (16) nach Anspruch 1, wobei die Dichtlippe (48) als eine erste Dichtlippe (48) definiert ist und wobei die zweite Koextrusionsschicht (28) eine zweite Dichtlippe (52) aufweist, die sich von der ersten Koextrusionsschicht (26) weg zu einem distalen Ende erstreckt, wobei die erste Dichtlippe (48) und die zweite Dichtlippe (52) voneinander beabstandet sind, um eine Abdichtung gegen das Fahrzeug zu erzeugen.

3. Dichtungselement (16) nach Anspruch 1, wobei der Abschnitt (46) eine äussere Lippe (50) aufweist, die sich in den Fensterkanal (34) der ersten Koextrusionsschicht (26) erstreckt.

4. Dichtungselement (16) nach Anspruch 1, wobei die Vorderfläche (36) die Länge dieses Abschnittes (46) festlegt.

5. Dichtungselement (16) nach Anspruch 1, wobei die thermoplastische Vulkanisats-Komposition ein thermoplastisches Material umfasst, welches aus der Gruppe der Polypropylene, Polyethylene, Ethylenvinylacetate und Kombinationen davon ausgewählt ist.

6. Dichtungselement (16) nach Anspruch 5, wobei die thermoplastische Vulkanisats-Komposition mehr als 5 Gewichts-Teile des thermoplastischen Materials umfasst, bezogen auf 100 Gewichtsteile der thermoplastischen Vulkanisats-Komposition.

7. Dichtungselement (16) nach Anspruch 6, wobei die thermoplastische Vulkanisats-Komposition auch Ethylen-Propylen-Dien-Monomer umfasst.

8. Dichtungselement (16) nach Anspruch 1, wobei die zweite Koextrusionsschicht (28) ferner einen zweiten Abschnitt (62) aufweist, der innerhalb des Fensterkanals (34) der ersten Koextrusionsschicht (26) angeordnet ist, wobei dieser zweite Abschnitt (62) eine Vielzahl von Innenlippen (64) zum Abdichten und Führen eines Fensters aufweist.

9. Verfahren zur Herstellung eines Glaslaufdichtungselementes (16) mit einer ersten Koextrusionsschicht (26), einer zweiten Koextrusionsschicht (28) und einer dritten Koextrusionsschicht (30), wobei das Verfahren folgende Schritte umfasst:
Koextrudieren einer ersten elastomeren Komposition, um die erste Koextrusionsschicht (26) zu bilden, welche erste Koextrusionsschicht (26) einen Montagekanal (32), einen Fensterkanal (34) und eine Vorderseite (36), die vom Montagekanal (32) und dem Fensterkanal (34) beabstandet ist, festlegt;
Koextrudieren einer zweiten elastomeren Komposition, die sich von der ersten Koextrusionsschicht unterscheidet, um auf der ersten Koextrusionsschicht (26) eine zweite Koextrusionsschicht (28) zu bilden, wobei die zweite Koextrusionsschicht (28) einen an der Vorderseite (36) der ersten Koextrusionsschicht (26) angeordneten Abschnitt (46) und eine Dichtlippe (48) aufweist, welche auf der ersten Koextrusionsschicht (26) angeordnet ist und an dem Abschnitt (46) anliegt und sich von dieser Koextrusionsschicht (26) weg zu einem distalen Ende erstreckt; und
Koextrudieren einer thermoplastischen Vulkanisats-Komposition, die sich von der ersten und zweiten Koextrusionsschicht unterscheidet, um die dritte Koextruktionsschicht (30) auf der zweiten Koextruktionsschicht (28) zu bilden, wobei die dritte Koextrusionsschicht (30) auf dem Abschnitt (46) und der Dichtlippe (48) der zweiten Koextrusionsschicht (28) angeordnet ist, um Segmente der zweiten Koextrusionsschicht (28), die von der Aussenseite des Fahrzeugs sichtbar sind, abzudecken.

10. Verfahren nach Anspruch 9, wobei die Schritte des Koextrudierens der ersten elastomeren Komposition, um die erste Koextrusionsschicht (26) zu bilden, und des Koextrudierens der zweiten elastomeren Komposition, um die zweite Koextrusionsschicht (28) zu bilden, gleichzeitig durchgeführt werden.

11. Verfahren nach Anspruch 9, wobei der Schritt des Koextrudierens der thermoplastischen Vulkanisats-Komposition, um die dritte Koextrusionsschicht (30) zu bilden, nach dem Koextrudieren der ersten und zweiten Koextrusionsschichten (26 , 28) durchgeführt wird.

12. Verfahren nach Anspruch 9, ferner umfassend den Schritt des Erwärmens der ersten und zweiten Koextrusionsschichten (26, 28), um die erste und zweite elastomere Komposition vor dem Koextrudieren der thermoplastischen, die dritte Koextrusionsschicht (30) bildende, Vulkanisats-Komposition auszuhärten.

## Revendications

1. Organe d'étanchéité (16) pour une ouverture de véhicule comprenant :
une première couche à co-extrusion (26) définissant une rainure de montage (32), une rainure à vitre (34), et une face antérieure (36) espacée de ladite rainure de montage (32) et de ladite rainure à vitre (34), ladite première couche à co-extrusion (26) étant formée à partir d'une première composition élastomère ;
une deuxième couche à co-extrusion (28), présentant une partie (46) disposée sur ladite face antérieure (36) de ladite première couche à co-extrusion (26) et une lèvre d'étanchéité (48) disposée sur ladite première couche à co-extrusion (26) en butée avec ladite partie (46) et s'étendant depuis ladite première couche à co-extrusion (26) vers une extrémité distale, ladite deuxième couche à co-extrusion (28) étant formée à partir d'une deuxième composition élastomère différente de la première composition élastomère ; et
une troisième couche à co-extrusion (30), disposée sur ladite partie (46) et ladite lèvre d'étanchéité (48) de ladite deuxième couche à co-extrusion (28) pour recouvrir des segments de ladite deuxième couche à co-extrusion (28) qui sont visibles depuis l'extérieur d'un véhicule, ladite troisième couche à co-extrusion (30) étant formée d'une composition vulcanisée thermoplastique, différente desdites première et deuxième compositions élastomères.

2. Organe d'étanchéité (16) selon la revendication 1, selon lequel la lèvre d'étanchéité (48) est en outre définie sous forme d'une première lèvre d'étanchéité (48) et selon lequel ladite deuxième couche à co-extrusion (28) comporte une deuxième lèvre d'étanchéité (52) s'étendant depuis ladite première couche à co-extrusion (26) vers une extrémité distale, selon lequel ladite première lèvre d'étanchéité (48) et ladite deuxième lèvre d'étanchéité (52) sont espacées l'une de l'autre pour créer un joint étanche contre le véhicule.

3. Organe d'étanchéité (16) selon la revendication 1, selon lequel la partie (46) présente une lèvre extérieure (50) s'étendant dans ladite rainure à vitre (34) de ladite première couche à co-extrusion (26).

4. Organe d'étanchéité (16) selon la revendication 1, selon lequel ladite face antérieure (36) définit la longueur de ladite partie (46).

5. Organe d'étanchéité (16) selon la revendication 1, selon lequel ladite composition vulcanisée thermoplastique comprend un matériau thermoplastique choisi dans le groupe consistant en le polypropylène, le polyéthylène, l'éthylène-acétate de vinyle, et des combinaisons de ceux-ci.

6. Organe d'étanchéité (16) selon la revendication 1, selon lequel ladite composition vulcanisée thermoplastique comprend plus de 5 parties en poids dudit matériau thermoplastique, sur la base de 100 parties en poids de ladite composition vulcanisée thermoplastique.

7. Organe d'étanchéité (16) selon la revendication 6, selon lequel ladite composition vulcanisée thermoplastique comprend en outre un monomère d'éthylène-propylène-diène.

8. Organe d'étanchéité (16) selon la revendication 1, selon lequel ladite deuxième couche à co-extrusion (28) comporte en outre une deuxième partie (62) disposée à l'intérieure de ladite rainure à vitre (34) de ladite première couche à co-extrusion (26), et selon lequel ladite deuxième partie (62) présente une pluralité de lèvres intérieures (64) pour étanchéifier et guider une vitre.

9. Procédé de préparation d'un organe d'étanchéité coopérant avec du verre (16) comprenant une première couche à co-extrusion (26), une deuxième couche à co-extrusion (28), et une troisième couche à co-extrusion (30), ledit procédé comprenant les étapes consistant à :
co-extruder une première composition élastomère pour former la première couche à co-extrusion (26), la première couche à co-extrusion (26) définissant une rainure de montage (32), une rainure à vitre (34), et une face antérieure (36) espacée de la rainure de montage (32) et de la rainure à vitre (34) ;
co-extruder une deuxième composition élastomère, différente de la première composition élastomère, pour former la deuxième couche à co-extrusion (28) sur la première couche à co-extrusion (26), la deuxième couche à co-extrusion (28) présentant une partie (46) disposée sur la face antérieure (36) de la première couche à co-extrusion (26) et une lèvre d'étanchéité (48) disposée sur la première couche à co-extrusion (26) en butée avec la partie (46) et s'étendant depuis la première couche à co-extrusion (26) vers une extrémité distale ; et
co-extruder une composition vulcanisée thermoplastique, différente des première et deuxième compositions élastomères, pour former la troisième couche à co-extrusion (30) sur la deuxième couche à co-extrusion (28), la troisième couche à co-extrusion (30) étant disposée sur la partie (46) de la lèvre d'étanchéité (48) de la deuxième couche à co-extrusion (28) pour recouvrir des segments de la deuxième couche à co-extrusion (28) qui sont visibles depuis l'extérieur d'un véhicule.

10. Procédé selon la revendication 9, selon lequel les étapes de co-extrusion de la première composition élastomère pour former la première couche à co-extrusion (26) et de co-extrusion de la deuxième composition élastomère pour former la deuxième couche à co-extrusion (28) sont entreprises simultanément.

11. Procédé selon la revendication 9, selon lequel l'étape de co-extrusion de la composition vulcanisée thermoplastique pour former la troisième couche à coextrusion (30) est entreprise ultérieurement à la co-extrusion des première et deuxième couches à co-extrusion (26,28).

12. Procédé selon la revendication 9, comprenant en outre l'étape de chauffage des première et deuxième couches à co-extrusion (26, 28) pour cuire les première et deuxième couches à co-extrusion avant de co-extruder la composition vulcanisée thermoplastique pour former la troisième couche à co-extrusion (30).
